# EUROPEAN PATENT APPLICATION

(11) **EP 4 477 375 A1**
(43) Date of publication of application: **18.12.2024**
(21) Application number: 23763516.4
(22) Date of filing: 01.03.2023
(51) Int. Cl.: B28B 1/30, C04B 24/20, C04B 24/26, C04B 28/02

(54) **METHOD FOR PRODUCING LAMINATION MOLDED ARTICLE, HEAT-SENSITIVE GELLING AGENT, AND LAMINATION MOLDING COMPOSITION**

(30) Priority: 01.03.2022 JP 2022030905
(71) Applicant: Nippon A&L Inc., Osaka-shi, Osaka 541-8550 (JP)
(72) Inventor: TANEMURA Atsumi, Osaka-shi, Osaka 554-8558 (JP)
(74) Representative: Vossius & Partner Patentanwälte Rechtsanwälte mbB
(86) International application number: PCT/JP2023/007687
(87) International publication number: WO 2023/167259

(57) **Abstract**

A method for producing an additive manufactured object, the method comprising layering a composition for additive manufacturing comprising a water-curable inorganic composition and a heat-sensitive gelling agent, and non-fluidizing the composition for additive manufacturing by heating at the time of layering and/or after layering, wherein the heat-sensitive gelling agent contains an aqueous medium, a polymer dispersed in the aqueous medium, and a nonionic surfactant having a cloud point of 30°C or higher and an HLB value of 10 to 18, and the heat-sensitive gelling agent is a heat-sensitive gelling agent having a value of a1/a0 of 15 or more when a penetration resistance value at 17 ± 3°C immediately after defoaming is defined as a0 and a penetration resistance value at 17 ± 3°C after microwave heating at 600 W for 30 seconds after defoaming is defined as a1.

## Description

### Technical Field

The present invention relates to a method for producing an additive manufactured object, a heat-sensitive gelling agent, and a composition for additive manufacturing.

### Background Art

3D printer construction in which construction is performed by layering a cement material using a 3D printer (additive manufacturing apparatus) based on three-dimensional data of a construction has attracted attention. It is said that when this construction method is used, a free design can be made as compared with the conventional method, and the cost can be greatly reduced by labor saving and shortening the construction period.

The cement materials are widely used as construction materials, but require a considerable time to solidify. Therefore, attempts have been made to shorten the solidification time. For example, Patent Literature 1 describes that, for the purpose of shortening the drying reaction, an aqueous resin emulsion having a specific chemical structure having heat-sensitive gelation ability is added to a water-curable inorganic powder to obtain a soft mortar sheet.

### Citation List

### Patent Literature

Patent Literature 1: Japanese Unexamined Patent Publication No. 2005-104749

### Summary of Invention

### Technical Problem

In the case of layering the cement material with a 3D printer, sagging and crushing of the cement inevitably occur, but even if the mortar material described in Patent Literature 1 made for shortening the drying reaction is applied to the 3D printer, the above-described problems cannot be solved. This is because Patent Literature 1 merely discloses a method effective in a range in which a mortar material is heated in a state of being sandwiched between two carrier films to form a film, and does not have a composition assumed to layer cement materials in the vertical direction.

An object of the present invention is to provide a method for producing an additive manufactured object by additive manufacturing such as 3D printing, in which occurrence of sagging and crushing of a water-curable inorganic composition during layer is reduced to a practically sufficient level.

Another object of the present invention is to provide a material to be contained in a water-curable inorganic composition to be used for additive manufacturing such as 3D printing, the material having excellent defoaming properties, high miscibility with the water-curable inorganic composition, and rapidly non-fluidized by being mixed with the water-curable inorganic composition and heated, and a composition for additive manufacturing using the material.

### Solution to Problem

The present invention provides the following [1] to [15].
[1] A method for producing an additive manufactured object, the method including layering a composition for additive manufacturing comprising a water-curable inorganic composition and a heat-sensitive gelling agent, and non-fluidizing the composition for additive manufacturing by heating at the time of layering and/or after layering,
   wherein the heat-sensitive gelling agent contains an aqueous medium, a polymer dispersed in the aqueous medium, and a nonionic surfactant having a cloud point of 30°C or higher and an HLB value of 10 to 18,
   wherein the heat-sensitive gelling agent is a heat-sensitive gelling agent having a value of a1/a0 of 15 or more when, in a penetration resistance value (needle diameter = 2 mm, piercing speed = 30 mm/min, piercing depth = 10 mm) measured after defoaming by adding 100 g of the following formulation of (1) to (5) [The amounts of (1) to (5) are in terms of solid content, and the moisture content is set to 18.5 mass%.]:
      (1) 100 parts by mass of mortar;
      (2) 1 part by mass of sodium gluconate;
      (3) 0.5 parts by mass of carboxymethyl cellulose:
      (4) 0.1 parts by mass of silicone antifoaming agent; and
      (5) 4.5 parts by mass of the heat-sensitive gelling agent,
   into a cylindrical container with an open top,
   a value at 17 ± 3°C immediately after defoaming is defined as a0 and a value at 17 ± 3°C after microwave heating at 600 W for 30 seconds after defoaming is defined as a1.

According to the production method, additive manufacturing such as 3D printing can be performed in a state in which occurrence of sagging and crushing of the water-curable inorganic composition during layer is reduced to a practically sufficient level. The heat-sensitive gelling agent refers to a material that causes gelation by heating.

The heat-sensitive gelling agent exhibiting such a penetration resistance value can prevent occurrence of sagging and crushing of the water-curable inorganic composition during layer. In addition, since the composition for additive manufacturing used in the above production method can be rapidly non-fluidized after heating, it also has a property of being excellent in fluidity when being discharged from the nozzle. In addition, the composition for additive manufacturing is excellent in defoaming properties, and for example, bubbles disappear only by application of light vibration, and final insufficient strength is prevented. Since the above heat-sensitive gelling agent also acts as a binder, the adhesive strength between layers after curing is improved. That is, according to the present production method, it is also possible to solve problems such as improving the fluidity when discharging the composition for additive manufacturing before curing from the nozzle, improving the defoaming properties of the composition for additive manufacturing before curing, and improving the adhesive strength between layers after curing of the composition for additive manufacturing.

[2] The production method according to [1], wherein the polymer is at least one kind selected from the group consisting of a homopolymer or copolymer of a conjugated diene and a homopolymer or copolymer of an ethylene-based unsaturated monomer. Such a conjugated diene-based polymer or vinyl-based polymer is effective as a component of the heat-sensitive gelling agent.

[3] The production method according to [2], wherein the homopolymer or copolymer of the conjugated diene is at least one kind selected from the group consisting of styrene-butadiene-based rubber, methylmethacrylate-butadiene-based rubber, acrylonitrile-butadiene-based rubber, styrene-butadiene-vinylpyridine-based rubber, butadiene rubber, and natural rubber. Such a conjugated diene-based polymer is particularly effective as a component of the heat-sensitive gelling agent.

[4] The production method according to any one of [1] to [3], wherein the nonionic surfactant is polyoxyethylene alkyl ether and/or polyoxyethylene aryl ether. When the above components are used as the nonionic surfactant, layering properties become particularly excellent.

[5] The production method according to [4], wherein in the polyoxyethylene alkyl ether, the alkyl moiety is an alkyl having 12 to 20 carbon atoms.

[6] The production method according to [4], wherein the polyoxyethylene aryl ether has an aryl moiety in which at least one of hydrogen atoms is aralkyl-substituted.

When the components [5] and [6] are used as the nonionic surfactant, the occurrence of sagging and crushing of the water-curable inorganic composition during layering can be remarkably reduced. In addition, the nonionic surfactant above is excellent in the balance between hydrophilicity and hydrophobicity, the miscibility with the water-curable inorganic composition is improved, mixing of bubbles is prevented, the defoaming properties are also excellent, and the nonionic surfactant also contributes to improvement of the final strength.

[7] The production method according to any one of [1] to [6], wherein the water-curable inorganic composition is cement specified in JIS R 5210:2019, JIS R 5211:2019, JIS R 5212:2019, JIS R 5213:2019, or JIS R 5214:2019, or mortar or concrete comprising the cement. Such cement, mortar or concrete exhibits excellent strength after curing when combined with a gelling agent having the above-mentioned properties.

[8] A heat-sensitive gelling agent for a water-curable inorganic composition to be additive manufactured, the heat-sensitive gelling agent including:
a dispersion comprising an aqueous medium, a carboxy group-containing polymer (with the proviso that the polymer has no group represented by -NHCH₂O-.) comprising a carboxy group-containing monomer as a monomer unit, dispersed in the aqueous medium, and a surfactant (in the dispersion, the carboxy group may form a salt.),
wherein a ratio of the carboxy group-containing monomer to all monomers constituting the carboxy group-containing polymer is 0.1 to 5.0 mass%, and
the surfactant comprising:
   0.5 to 3 parts by mass of an anionic surfactant based on 100 parts by mass of the carboxy group-containing polymer; and
   1 to 8 parts by mass of a nonionic surfactant having a cloud point of 30 to 90°C based on 100 parts by mass of the carboxy group-containing polymer. When the carboxy group forms a salt in the dispersion, a part or all of the carboxy group may form a salt, and examples of the salt include alkali metal salts such as sodium salts and calcium salts, alkaline earth metal salts, and ammonium salts.

The present inventors have found that a heat-sensitive gelling agent capable of being rapidly non-fluidized by being mixed with a water-curable inorganic composition and heated is effective for a material for preventing sagging and crushing used by being added to the water-curable inorganic composition such as cement and mortar, and further, the heat-sensitive gelling agent needs to have good miscibility with the water-curable inorganic composition, and when the heat-sensitive gelling agent is to be heated and solidified for additive manufacturing such as 3D printing, the defoaming properties of the heat-sensitive gelling agent is very important.

That is, when the water-curable inorganic composition has air bubbles, the air bubbles rapidly expand and the whole of the water-curable inorganic composition bulges like a sponge when the water-curable inorganic composition is heated in an attempt to be gelled, and when the water-curable inorganic composition is solidified in such a state, the strength of the manufactured object is extremely lowered. In additive manufacturing such as 3D printing, it is difficult to place a reinforcing bar in a manufactured object, and therefore prevention of air bubbles is very important.

The heat-sensitive gelling agent described in [8] is excellent in defoaming properties, and most of the bubbles disappear soon (for example, in about 10 minutes) after foaming once. In addition, it is excellent in miscibility when contained in a water-curable inorganic composition used for additive manufacturing such as 3D printing. Then, the mixture is mixed with the water-curable inorganic composition and heated to be rapidly non-fluidized (gelled). It is considered that the cation concentration (For example, calcium ion concentration) is increased by heating the water-curable inorganic composition, and the anionic surfactant is deactivated. In addition, the nonionic surfactant is deactivated by heating to the cloud point or higher of the surfactant. In this way it is believed that gelation occurs. Gelation reduces sagging and crushing of the water-curable inorganic composition at the time of 3D printing (additive manufacturing) to a practically sufficient level.

[9] The heat-sensitive gelling agent according to [8], wherein the carboxy group-containing polymer contains an ethylene-based unsaturated carboxylic acid monomer as the carboxy group-containing monomer and an aliphatic conjugated diene-based monomer as monomer units.

[10] The heat-sensitive gelling agent according to [9], further including, as a monomer unit, at least one kind selected from the group consisting of an alkenyl aromatic monomer, a vinyl cyanide-based monomer, an unsaturated carboxylic acid alkyl ester-based monomer, a hydroxyalkyl group-containing unsaturated monomer, and an unsaturated carboxylic acid amide-based monomer.

The carboxy group-containing polymer composed of the monomer according to [9] or [10] is easily produced by emulsion polymerization, has excellent physical properties when a composition for additive manufacturing obtained by mixing the carboxy group-containing polymer with a water-curable inorganic composition is cured, and also has excellent defoaming properties and miscibility.

[11] The heat-sensitive gelling agent according to any one of [8] to [10], in which the anionic surfactant is a sulfonic acid-based anionic surfactant.

[12] The heat-sensitive gelling agent according to any one of [8] to [11], wherein the nonionic surfactant is a polyoxyalkylene alkyl ether and/or a polyoxyalkylene aryl ether.

[13] The heat-sensitive gelling agent according to any one of [8] to [12], wherein the nonionic surfactant has an HLB value of 11 to 15. Within this range, the lower the HLB value, the better the defoaming properties tend to be.

[14] A composition for additive manufacturing, including: the heat-sensitive gelling agent according to any one of [8] to [13]; and a water-curable inorganic composition. The composition for additive manufacturing can be subjected to additive manufacturing such as 3D printing, and gelation occurs due to heating, so that occurrence of sagging and crushing is suppressed.

[15] The composition for additive manufacturing according to [14], wherein the water-curable inorganic composition is cement specified in JIS R 5210:2019, JIS R 5211:2019, JIS R 5212:2019, JIS R 5213:2019, or JIS R 5214:2019, or mortar or concrete comprising the cement.

The use of the composition for additive manufacturing of [14] or [15] makes it possible to provide a method for producing a manufactured object. That is, it is possible to provide a method for producing a manufactured object by additive manufacturing a water-curable inorganic composition, in which the heat-sensitive gelling agent according to any one of [8] to [13] is contained in the water-curable inorganic composition, and at the time of layering and/or after layering, the heat-sensitive gelling agent gels by heating the layered object.

### Advantageous Effects of Invention

According to the present invention, it is possible to provide a method for producing an additive manufactured object by additive manufacturing such as 3D printing, in which occurrence of sagging and crushing of a water-curable inorganic composition during layer is reduced to a practically sufficient level.

The present invention also makes it possible to provide a material to be contained in a water-curable inorganic composition to be used for additive manufacturing such as 3D printing, the material having excellent defoaming properties, high miscibility with the water-curable inorganic composition, and rapidly non-fluidized by being mixed with the water-curable inorganic composition and heated, and a composition for additive manufacturing using the material.

### Description of Embodiments

A method for producing an additive manufactured object according to an embodiment, the method including layering a composition for additive manufacturing comprising a water-curable inorganic composition and a heat-sensitive gelling agent, and non-fluidizing the composition for additive manufacturing by heating at the time of layering and/or after layering, wherein (i) the heat-sensitive gelling agent contains an aqueous medium, a polymer dispersed in the aqueous medium, and a nonionic surfactant having a cloud point of 30°C or higher and an HLB value of 10 to 18, wherein (ii) the heat-sensitive gelling agent is a heat-sensitive gelling agent having a value of a1/a0 of 15 or more when, in a penetration resistance value (needle diameter = 2 mm, piercing speed = 30 mm/min, piercing depth = 10 mm) measured after defoaming by adding 100 g of the following formulation of (1) to (5) [The amounts of (1) to (5) are in terms of solid content, and the moisture content is set to 18.5 mass%.] into a cylindrical container with an open top, a value at 17 ± 3°C immediately after defoaming is defined as a0 and a value at 17 ± 3°C after microwave heating at 600 W for 30 seconds after defoaming is defined as a1. Defoaming can be performed by applying vibration to a cylindrical container including the formulation of (1) to (5) so that visible foam is not generated at least in the formulation at the opening portion of the cylindrical container.
(1) 100 parts by mass of mortar
(2) 1 part by mass of sodium gluconate
(3) 0.5 parts by mass of carboxymethyl cellulose
(4) 0.1 parts by mass of silicone antifoaming agent
(5) 4.5 parts by mass of the heat-sensitive gelling agent

The above embodiment may be referred to as a "first embodiment". In addition, a nonionic surfactant having a cloud point of 30°C or higher and an HLB value of 10 to 18 may be referred to as "nonionic surfactant 1", and a nonionic surfactant other than the nonionic surfactant 1 may be referred to as "nonionic surfactant 2". Examples of the aqueous medium include water, and water may contain a water-soluble component (For example, ethanol, glycerol, and the like).

Hereinafter, the first embodiment will be described in detail.

The heat-sensitive gelling agent may be provided as a dispersion (Emulsions, latex, etc.) including the above polymer and a nonionic surfactant. In this case, the above polymer may be obtained by emulsification or dispersion polymerization with a nonionic surfactant, or a nonionic surfactant and another surfactant (anionic surfactant, cationic surfactant, etc.) (Method A). The above polymer may also be emulsification or dispersion polymerized with the above other surfactant and a nonionic surfactant may be added later (Method B). Alternatively, a nonionic surfactant may be added to those obtained by Method A (Method C). The nonionic surfactant used in Method A, Method B, and Method C may be composed of only the nonionic surfactant 1, or may be a mixture of the nonionic surfactant 1 and the nonionic surfactant 2.

As the polymer dispersed in the aqueous medium, a polymer having a glass transition temperature (It may be abbreviated as "Tg".) of -50 to 35°C measured at a temperature rising rate of 10°C/min with a differential scanning calorimeter can be employed. The Tg may be -45 to 30°C or -40 to 30°C. As the polymer dispersed in the aqueous medium, a polymer having an elastic modulus (Young's modulus) of 1 to 10 MPa at 25°C can also be employed. The Young's modulus can be measured in accordance with JIS K 6251:2017. As the polymer dispersed in the aqueous medium, a polymer having a Tg of -50 to 35°C and a Young's modulus of 1 to 10 MPa is suitable, and the polymer may be a crosslinked polymer or an uncrosslinked polymer. Such a polymer has properties as an elastomer.

As the polymer dispersed in the aqueous medium, a homopolymer or copolymer of a conjugated diene (It may be abbreviated as "conjugated diene-based polymer".) and a homopolymer or copolymer of an ethylene-based unsaturated monomer (It may be abbreviated as "vinyl-based polymer".) are effective.

Examples of the "conjugated diene-based polymer " used in the first embodiment include at least one kind selected from the group consisting of styrene-butadiene-based rubber (Hereinafter, sometimes abbreviated as "SBR", and a modified product such as carboxy modification is also included in SBR.), methylmethacrylate-butadiene-based rubber (Hereinafter, the modified product may be abbreviated as "MBR", and a modified product such as carboxy modification is also included in the MBR.), acrylonitrile-butadiene-based rubber (Hereinafter, sometimes abbreviated as "NBR", and modified products such as carboxy-modified products, styrene-modified products, and (meth)acrylate ester-modified products are also included in NBR.), styrene-butadiene-vinylpyridine-based rubber (Hereinafter, sometimes abbreviated as "VP", and a modified product such as carboxy modification is also included in VP.), butadiene rubber (Hereinafter, it may be abbreviated as "BR", and a modified product such as carboxy modification is also included in BR.), and natural rubber (Hereinafter, sometimes abbreviated as "NR", and polyisoprene is also included in NR.).

When the above conjugated diene-based polymer is provided as a dispersion, the conjugated diene-based polymer is provided as at least one kind selected from the group consisting of a styrene-butadiene-based rubber emulsion (styrene-butadiene-based rubber latex), a methylmethacrylate-butadiene-based rubber emulsion (methylmethacrylate-butadiene-based rubber emulsion latex), an acrylonitrile-butadiene-based rubber emulsion (acrylonitrile-butadiene-based rubber latex), a styrene-butadiene-vinylpyridine-based rubber emulsion (styrene-butadiene-vinylpyridine-based rubber latex), a butadiene rubber emulsion (butadiene rubber latex), and a natural rubber emulsion (natural rubber latex).

Examples of the conjugated diene-based polymer include copolymers of an aliphatic conjugated diene-based monomer (For example, 10 to 80 mass% based on the total monomers), an ethylene-based unsaturated carboxylic acid monomer (For example, 0.5 to 15 mass% based on the total monomers), and other copolymerizable monomers (For example, 5 to 89.5 mass% based on the total monomers).

Examples of the aliphatic conjugated diene-based monomer include 1,3-butadiene, 2-methyl-1,3-butadiene, 2,3-dimethyl-1,3-butadiene, 2-chloro-1,3-butadiene, substituted linear conjugated pentadienes, substituted and side chain conjugated hexadienes, and the like, and one kind or two or more kinds thereof can be used. From the viewpoint of easy industrial production, easy availability, and cost, use of 1,3-butadiene is particularly preferable.

As the ethylene-based unsaturated carboxylic acid monomer, one kind or two or more kinds of monobasic acids or dibasic acids (anhydrides) such as itaconic acid, acrylic acid, methacrylic acid, crotonic acid, maleic acid, and fumaric acid can be used.

Examples of the other monomer include an alkenyl aromatic monomer, a vinyl cyanide-based monomer, an unsaturated carboxylic acid alkyl ester-based monomer, an unsaturated monomer containing a hydroxyalkyl group, and an unsaturated carboxylic acid amide-based monomer.

Examples of the alkenyl aromatic monomer include styrene, α-methylstyrene, methyl-α-methylstyrene, vinyltoluene, and divinylbenzene. These can be used singly or in combination of two or more kinds thereof. From the viewpoint of easy industrial production, easy availability, and cost, use of styrene is particularly preferable.

Examples of the vinyl cyanide-based monomer include monomers such as acrylonitrile, methacrylonitrile, α-chloracrylonitrile, and α-ethylacrylonitrile. These can be used singly or in combination of two or more kinds thereof. From the viewpoint of easy industrial production, easy availability, and cost, use of acrylonitrile or methacrylonitrile is particularly preferable.

Examples of the unsaturated carboxylic acid alkyl ester-based monomer include methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, monomethyl fumarate, monoethyl fumarate, and 2-ethylhexyl acrylate. These can be used singly or in combination of two or more kinds thereof. From the viewpoint of easy industrial production, easy availability, and cost, use of methyl methacrylate is particularly preferable.

Examples of the unsaturated monomer containing a hydroxyalkyl group include β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro -2-hydroxypropyl methacrylate, di-(ethylene glycol)maleate, di-(ethylene glycol)itaconate, 2-hydroxyethyl maleate, bis(2-hydroxyethyl)maleate, and 2-hydroxyethyl methyl fumarate. These can be used singly or in combination of two or more kinds thereof.

Examples of the unsaturated carboxylic acid amide-based monomer include acrylamide, methacrylamide, N-methylol acrylamide, N-methylol methacrylamide, and N,N-dimethylacrylamide. These can be used singly or in combination of two or more kinds thereof.

In addition to the above monomers, any monomer used in normal emulsion polymerization, such as ethylene, propylene, vinyl acetate, vinyl propionate, vinyl chloride, and vinylidene chloride, can be used.

Such a conjugated diene-based polymer may have a carboxy group, and in that case, the ratio of the carboxy group-containing monomer to the total monomers constituting the polymer is preferably 0.1 to 5.0 mass%. The proportion of the carboxy group-containing monomer may be 0.5 to 3.5 mass% or 1.0 to 3.0 mass%.

Examples of the "vinyl-based polymer" used in the first embodiment include an acrylic polymer and/or an ethylene-based copolymer.

The acrylic polymer means a polymer containing a monomer having a (meth)acryloyl group or a monomer copolymerizable with the monomer as a monomer unit (However, an ethylene-based copolymer according to the following definition is excluded.). Here, (meth)acryloyl means acryloyl or methacryloyl, and the same applies to similar compounds.

The acrylic polymer may be provided as an aqueous dispersion, and in that case, a monomer as a raw material may be emulsion polymerized to obtain an aqueous dispersion. The aqueous dispersion of the acrylic polymer may be a forced emulsification type aqueous dispersion in which a solution of an organic solvent of the acrylic polymer is dispersed in water to remove at least a part of the organic solvent.

As the acrylic polymer, an acrylic rubber having properties as an elastomer can be used. As such an acrylic rubber, one having a Tg of - 40 to 30°C as defined above is preferable.

As the acrylic polymer, an acrylic polymer which is a copolymer of a low-Tg monomer, which refers to a monomer forming a homopolymer having a Tg of 20°C or less, preferably 0°C or less, and a high-Tg monomer, which refers to a monomer forming a homopolymer having a Tg of 50°C or higher,and has a Tg of -40 to 30°C as defined above as a copolymer is suitable. At least one kind of the low-Tg monomer and the high-Tg monomer has the (meth)acryloyl group described above.

Examples of the low-Tg monomer include an acrylic acid ester of a linear or branched non-tertiary alcohol having 1 to 12 carbon atoms, and the number of carbon atoms of the non-tertiary alcohol may be 4 to 12 or 4 to 8. Examples of such a non-tertiary alcohol include 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctyl alcohol, 2-ethyl-1-hexanol, 1-decanol, 2-propyl heptanol, 1-dodecanol, 1-tridecanol, and 1-tetradecanol.

That is, examples of the low-Tg monomer include n-butyl acrylate, isobutyl acrylate, hexyl acrylate, 2-ethyl-hexyl acrylate, isooctyl acrylate, caprolactone acrylate, isodecyl acrylate, tridecyl acrylate, lauryl methacrylate, methoxy-polyethylene glycol-monomethacrylate, lauryl acrylate, ethoxy-ethoxyethyl acrylate, and ethoxylated nonyl acrylate.

Examples of the high-Tg monomer include methacrylic acid esters of linear or branched non-tertiary alcohols having 1 to 2 or 6 to 18 carbon atoms, or acrylic acid esters of cyclic non-tertiary alcohols having 6 to 18 carbon atoms.

That is, examples of the high-Tg monomer include methyl methacrylate, ethyl methacrylate, stearyl methacrylate, phenyl methacrylate, cyclohexyl methacrylate, isobornyl acrylate, isobornyl methacrylate, benzyl methacrylate, 3,3,5 trimethylcyclohexyl acrylate, cyclohexyl acrylate, and propyl methacrylate.

In addition to the above, examples of the high-Tg monomer include styrene, alkylstyrene (methylstyrene or the like), (meth)acrylic acid, (meth)acrylamide, N-alkylacrylamide (N-octylacrylamide or the like), N,N-dialkylacrylamide (N,N-dimethylacrylamide, etc.), and (meth)acrylonitrile.

The ethylene-based copolymer is a copolymer of ethylene and an ethylene-based unsaturated monomer, and examples thereof include ethylene vinyl acetate, ethylene ethyl acrylate, ethylene vinyl ether, and an ethylene-α-olefin copolymer.

The ethylene-based copolymer may be provided as an aqueous dispersion, and in that case, a monomer as a raw material may be emulsion polymerized to obtain an aqueous dispersion.

As the ethylene-based copolymer, an ethylene-based copolymer having properties as an elastomer can be used. As such an ethylene-based copolymer, one having a Tg of -40 to 30°C according to the above definition is preferable.

In the first embodiment, with respect to the formulation of (1) to (5) described above [The amounts of (1) to (5) are in terms of solid content, and the moisture content is set to 18.5 mass%.], a gelling agent is used which has a value of a1/a0 (30 second value) of 15 or more using a1 after microwave heating at 600 W for 30 seconds.

The value (30 second value) of a1/a0 may be 15 to 350, and may further be 19 to 330. In addition to the value (30 second value) of a1/a0 using a1 after microwave heating at 600 W for 30 seconds being 15 or more, the value (50 second value) of a2/a0 using a2 after microwave heating at 600 W for 50 seconds may be 30 or more. The value (50 second value) of a2/a0 may be 30 to 530 or 35 to 530. Further, the value (70 second value) of a3/a0 obtained by using a3 after microwave heating at 600 W for 70 seconds may be 60 or more. The value (70 second value) of a3/a0 may be 60 to 900 or 60 to 880. That is, the value (30 second value) of a1/a0 may be 15 or more and the value (50 second value) of a2/a0 may be 30 or more, the value (30 second value) of a1/a0 may be 15 or more and the value (70 second value) of a3/a0 may be 60 or more, the value (30 second value) of a1/a0 may be 15 or more, the value (50 second value) of a2/a0 may be 30 or more and the value (70 second value) of a3/a0 may be 60 or more.

As the mortar (1) contained in the formulations (1) to (5), "quick-dry cement (sokkan cement)" (https://www.monotaro.com/g/00269134/?t.q= %E9%80%9F%E4%B9 %BE%20%E3%82%BB%E3%83%A1%E3%83%B3%E3%83%88) manufactured by Katei kagaku kogyo Co., Ltd. or its equivalent is used. As the silicone antifoaming agent (4) contained in the formulations of (1) to (5), an emulsion type antifoaming agent (For example, "DOWSIL^{™} SH 5507 Emulsion" manufactured by Dow Toray Co., Ltd. or its equivalent) containing α-(octadecanoyloxy)-ω-hydroxy-poly (oxyethylene), glyceryl monostearate, silicon dioxide and octamethylcyclotetrasiloxane as an active ingredient of 28% is used.

The heat-sensitive gelling agent used in the first embodiment contains a nonionic surfactant having a cloud point of 30°C or higher and an HLB value of 10 to 18. The cloud point means a cloud point defined in JIS K 3211:1990, and can be measured with, for example, a 2 mass% water diluent. The HLB value is a value representing the degree of affinity of the surfactant for water and oil (organic compound insoluble in water), and can be obtained by a Griffin method (HLB value = 20 × sum of formula weights of hydrophilic parts/molecular weight).

The cloud point of the nonionic surfactant may be 30 to 100°C, 30 to 98°C, 40 to 98°C, and the HLB value of the nonionic surfactant may be 11 to 17, 12 to 17.

As the nonionic surfactant, polyoxyethylene alkyl ether and/or polyoxyethylene aryl ether can be used. The polyoxyethylene alkyl ether is preferably one in which (i) the alkyl moiety is an alkyl having 12 to 20 carbon atoms, and the polyoxyethylene aryl ether is preferably one in which (ii) the aryl moiety is an aryl in which at least one of hydrogen atoms is aralkyl-substituted. Examples of (i) the nonionic surfactant include polyoxyethylene lauryl ether, polyoxyethylene cetyl ether, polyoxyethylene stearyl ether, and polyoxyethylene octyldodecyl ether. Examples of (ii) the nonionic surfactant include polyoxyethylene distyrenated phenyl ether and polyoxyethylene tribenzyl phenyl ether.

In the first embodiment, the amount of the nonionic surfactant 1 relative to 100 parts by mass of the polymer can be 1 to 12 parts by mass, 3 to 10 parts by mass, or 5 to 8 parts by mass.

As the water-curable inorganic composition in the first embodiment, Portland cement specified in JIS R 5210:2019, blast furnace cement specified in JIS R 5211:2019, silica cement specified in JIS R 5212:2019, fly ash cement specified in JIS R 5213:2019, or ecological cement specified in JIS R 5214:2019, or mortar or concrete comprising these cements can be used.

In the first embodiment, 1 to 20 parts by mass, 3 to 15 parts by mass, or 3 to 10 parts by mass of the heat-sensitive gelling agent can be used with respect to 100 parts by mass (in terms of solid content) of the water-curable inorganic composition.

In the first embodiment, the heat-sensitive gelling agent may contain additives such as an antifoaming agent, a dispersant, an antiaging agent, a viscosity modifier, a preparation for pH, a preservative, an electrolyte, a filler, a plasticizer, starch, and a coloring pigment as long as the effects of the present invention are not affected. The solid content concentration of the heat-sensitive gelling agent in the first embodiment can be, for example, 30 to 60 mass%, and may be 40 to 50 mass%.

A thermosensitive gelling agent according to an embodiment is a heat-sensitive gelling agent for a water-curable inorganic composition to be additive manufactured, the heat-sensitive gelling agent including: a dispersion comprising an aqueous medium, a carboxy group-containing polymer (with the proviso that the polymer has no group represented by -NHCH₂O-.) comprising a carboxy group-containing monomer as a monomer unit, dispersed in the aqueous medium, and a surfactant (in the dispersion, the carboxy group may form a salt.), wherein a ratio of the carboxy group-containing monomer to all monomers constituting the carboxy group-containing polymer is 0.1 to 5.0 mass%, and the surfactant comprising: 0.5 to 3 parts by mass of an anionic surfactant based on 100 parts by mass of the carboxy group-containing polymer; and 1 to 8 parts by mass of a nonionic surfactant having a cloud point of 30 to 90°C based on 100 parts by mass of the carboxy group-containing polymer. This embodiment may be referred to as a "second embodiment".

Hereinafter, the second embodiment will be described in detail.

The carboxy group-containing polymer is dispersed in an aqueous medium, and the anionic surfactant and the nonionic surfactant are usually present in a state of being dissolved in an aqueous medium, and have a function of emulsifying and dispersing the carboxy group-containing polymer in the aqueous medium. Examples of the aqueous medium include water, and water may contain a water-soluble component (for example, ethanol, glycerol, and the like).

The carboxy group-containing polymer has a carboxy group on the side chain and/or terminal of the polymer molecule, but does not have a group represented by -NHCH₂O-. Examples of the group represented by -NHCH₂O- include -NHCH₂OH and -NHCH₂OCₙH₂ₙ₊₁ (n is a number of 1 to 4).

The backbone of the main chain of the carboxy group-containing polymer is not limited as long as the polymer has a carboxy group. The main chain may have continuous carbon (for example, a vinyl polymer), a urethane bond (polyurethane), an ester bond (polyester), an ether bond (polyether), or a combination thereof.

The water-curable inorganic composition comprising a carboxy group-containing polymer is heated for gelation during additive manufacturing. The minimum filming temperature (MFT) of the carboxy group-containing polymer is arbitrary, but the MFT is preferably 0 to 50°C and may be 5 to 40°C in consideration of the binder characteristics of the water-curable inorganic composition. The value of the glass transition temperature (Tg) is generally associated with MFT, but Tg is preferably -20 to 50°C and may be -15 to 40°C.

The carboxy group-containing polymer can be obtained by polymerization of monomers, and the ratio of the carboxy group-containing monomer to the total monomers constituting the carboxy group-containing polymer is 0.1 to 5.0 mass%. The proportion of the carboxy group-containing monomer may be 0.5 to 3.5 mass% or 1.0 to 3.0 mass%. When the proportion of the carboxy group-containing monomer is out of the range of 0.1 to 5.0 mass%, miscibility with the water-curable inorganic composition becomes poor. When the proportion of the carboxy group-containing monomer is less than 0.1 mass%, the miscibility with the water-curable inorganic composition can be compensated by an increase in the amount of the anionic surfactant, but in that case, the defoaming properties is poor, which is not preferable.

Examples of the carboxy group-containing polymer include a polymer containing an ethylene-based unsaturated carboxylic acid monomer (It corresponds to a carboxy group-containing monomer.) and an aliphatic conjugated diene-based monomer as monomer units. Examples of the ethylene-based unsaturated carboxylic acid monomer include monobasic acids or dibasic acid (which may be in the form of anhydrides) such as acrylic acid, methacrylic acid, crotonic acid, maleic acid, fumaric acid, and itaconic acid, and one kind or two or more kinds of these can be used. Examples of the aliphatic conjugated diene-based monomer include 1,3-butadiene, 2-methyl-1,3-butadiene, 2,3-dimethyl-1,3-butadiene, 2-chloro-1,3-butadiene, substituted linear conjugated pentadienes, substituted and side chain conjugated hexadienes, and the like, and one kind or two or more kinds thereof can be used. From the viewpoint of easy industrial production, easy availability, and cost, use of 1,3-butadiene is particularly preferable.

The carboxy group-containing polymer may contain, as a monomer unit, at least one kind selected from the group consisting of an alkenyl aromatic monomer, a vinyl cyanide-based monomer, an unsaturated carboxylic acid alkyl ester-based monomer, a hydroxyalkyl group-containing unsaturated monomer, and an unsaturated carboxylic acid amide-based monomer, in addition to the ethylene-based unsaturated carboxylic acid monomer and the aliphatic conjugated diene-based monomer.

Examples of the alkenyl aromatic monomer include styrene, α-methylstyrene, methyl-α-methylstyrene, vinyltoluene, and divinylbenzene. These can be used singly or in combination of two or more kinds thereof. From the viewpoint of easy industrial production, easy availability, and cost, use of styrene is particularly preferable.

Examples of the vinyl cyanide-based monomer include monomers such as acrylonitrile, methacrylonitrile, α-chloracrylonitrile, and α-ethylacrylonitrile. These can be used singly or in combination of two or more kinds thereof. From the viewpoint of easy industrial production, easy availability, and cost, use of acrylonitrile or methacrylonitrile is particularly preferable.

Examples of the unsaturated carboxylic acid alkyl ester-based monomer include methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, monomethyl fumarate, monoethyl fumarate, and 2-ethylhexyl acrylate. These can be used singly or in combination of two or more kinds thereof. From the viewpoint of easy industrial production, easy availability, and cost, use of methyl methacrylate is particularly preferable.

Examples of the unsaturated monomer containing a hydroxyalkyl group include β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro -2-hydroxypropyl methacrylate, di-(ethylene glycol)maleate, di-(ethylene glycol)itaconate, 2-hydroxyethyl maleate, bis(2-hydroxyethyl)maleate, and 2-hydroxyethyl methyl fumarate. These can be used singly or in combination of two or more kinds thereof.

Examples of the unsaturated carboxylic acid amide-based monomer include acrylamide, methacrylamide, N-methylol acrylamide, N-methylol methacrylamide, and N,N-dimethylacrylamide. These can be used singly or in combination of two or more kinds thereof.

In addition to the above monomers, any monomer used in normal emulsion polymerization, such as ethylene, propylene, vinyl acetate, vinyl propionate, vinyl chloride, and vinylidene chloride, can be used.

In a second embodiment, the carboxy group-containing polymer may be provided in a dispersion liquid (state of emulsion, latex, suspension, etc.) dispersed in an aqueous medium. The heat-sensitive gelling agent as a whole contains 0.5 to 3 parts by mass of an anionic surfactant based on 100 parts by mass of the carboxy group-containing polymer. When the carboxy group-containing polymer is provided as a dispersion liquid, 0.5 to 3 parts by mass of an anionic surfactant based on 100 parts by mass of the carboxy group-containing polymer may be contained in the state of the dispersion liquid. Alternatively, a dispersion liquid containing an anionic surfactant in an amount of less than 0.5 to 3 parts by mass may be prepared, and an anionic surfactant may be subsequently added so that the total amount becomes 0.5 to 3 parts by mass based on 100 parts by mass of the carboxy group-containing polymer when the heat-sensitive gelling agent is formed.

In the second embodiment, 1 to 8 parts by mass of a nonionic surfactant having a cloud point of 30 to 90°C based on 100 parts by mass of the carboxy group-containing polymer is contained as the whole heat-sensitive gelling agent. When the carboxy group-containing polymer is provided as a dispersion liquid, 1 to 8 parts by mass of a nonionic surfactant may be contained based on 100 parts by mass of the carboxy group-containing polymer in the state of the dispersion liquid. Alternatively, a dispersion liquid comprising a nonionic surfactant in an amount of less than 1 to 8 parts by mass (which may be a dispersion liquid comprising no nonionic surfactant) may be adjusted, and a nonionic surfactant may be subsequently added so that the total amount becomes 1 to 8 parts by mass based on 100 parts by mass of the carboxy group-containing polymer when the heat-sensitive gelling agent is formed. However, since the nonionic surfactant has a cloud point of 30 to 90°C, when the nonionic surfactant is added to the system during synthesis or preparation of the dispersion liquid, only the nonionic surfactant having a cloud point higher than the temperature for synthesis or preparation is added.

When the carboxy group-containing polymer is provided as a dispersion liquid, examples of the dispersion liquid include a styrene-butadiene-based latex (those containing styrene, butadiene, and a carboxy group-containing monomer as monomer components), a chloroprene-based latex (those containing chloroprene and a carboxy group-containing monomer as monomer components), a methyl methacrylate-butadiene-based latex (those containing methyl methacrylate, butadiene, and a carboxy group-containing monomer as monomer components), a nitrile rubber-based latex (those containing acrylonitrile, butadiene, and a carboxy group-containing monomer as monomer components), a polybutadiene-based latex (those containing butadiene and a carboxy group-containing monomer as monomer components), and a 2-vinylpyridine-styrene-butadiene-based latex (those containing 2-vinylpyridine, styrene, butadiene, and a carboxy group-containing monomer as a monomer component).

As the dispersion liquid, an acrylic acid ester resin-based emulsion (monomer component containing (meth)acrylic acid ester and carboxy group-containing monomer), a styrene-acrylic acid ester resin-based emulsion (those containing styrene, a (meth)acrylic acid ester, and a carboxy group-containing monomer as monomer components), an ethylene-vinyl acetate resin-based emulsion (those containing ethylene, vinyl acetate, and a carboxy group-containing monomer as monomer components), an ethylene-vinyl acetate-acrylic acid ester copolymer resin-based emulsion (those containing ethylene, vinyl acetate, (meth)acrylic acid ester, and carboxy group-containing monomer as monomer components), and the like can also be used.

Examples of the dispersion liquid also include a polyurethane emulsion (emulsion of polyurethane having a carboxy group on a side chain or a terminal) and a polyester emulsion (emulsion of polyester having a carboxy group on a side chain or a terminal). In the case of these emulsions, a carboxy group is introduced into the side chain or terminal of the polyurethane or polyester.

When the carboxy group-containing polymer is provided as a dispersion liquid, the solid content concentration thereof is usually 30 to 60 mass% and may be 40 to 50 mass%. The average particle size (The average particle diameter is measured by dyeing the copolymer latex with osmium tetroxide, then taking a transmission electron micrograph, measuring the diameters of 1000 particles using an image analysis processing apparatus (apparatus name: IP-1000PC manufactured by Asahi Kasei Corporation), and averaging the number of the particles.) of the carboxy group-containing polymer is arbitrary, but may be 80 to 250 nm, 100 to 200 nm, or 120 to 180 nm.

In the second embodiment, the heat-sensitive gelling agent contains a surfactant in addition to the aqueous medium and the carboxy group-containing polymer described above, and the surfactant contains 0.5 to 3 parts by mass of an anionic surfactant based on 100 parts by mass of the carboxy group-containing polymer and 1 to 8 parts by mass of a nonionic surfactant having a cloud point of 30 to 90°C based on 100 parts by mass of the carboxy group-containing polymer. As the surfactant, the inclusion of components other than these components is not prohibited, but the surfactant is preferably composed only of these components since it greatly affects heat-sensitive gelation.

Examples of the anionic surfactant include alkyl sulfate acid ester-based anionic surfactants such as sodium lauryl sulfate, triethanolamine lauryl sulfate, and ammonium lauryl sulfate; polyoxyethylene alkyl ether sulfate acid ester salt-based anionic surfactant such as sodium polyoxyethylene lauryl ether sulfate and sodium polyoxyethylene polyoxypropylene alkyl ether sulfate; sulfonic acid-based anionic surfactant such as sodium dodecylbenzenesulfonate, sodium alkylnaphthalenesulfonate, sodium dialkylsulfosuccinate, sodium alkylmonoamide sulfosuccinate, sodium alkyldiphenyl ether disulfonate, and sodium alkanesulfonate; carboxylic acid surfactants such as rosin acid salts and fatty acid salts. Among them, a sulfonic acid-based anionic surfactant is preferable.

The content of the anionic surfactant is 0.5 to 3 parts by mass based on 100 parts by mass of the carboxy group-containing polymer, and may be 1.0 to 2.5 parts by mass or 1.0 to 2.0 parts by mass. When the content of the anionic surfactant is less than 0.5 parts by mass, miscibility is deteriorated, and when the content of the anionic surfactant is more than 3 parts by mass, defoaming properties are deteriorated, and heat-sensitive gelation is also difficult.

Examples of the nonionic surfactant include polyoxyalkylene alkyl ether-based nonionic surfactants such as polyoxyethylene lauryl ether, polyoxyethylene cetyl ether, polyoxyethylene stearyl ether, polyoxyethylene oleyl ether, polyoxyethylene myristyl ether and polyoxyethylene octyldodecyl ether, and polyoxyalkylene aryl ether-based nonionic surfactants such as polyoxyethylene distyrenated phenyl ether and polyoxyethylene tribenzyl phenyl ether.

The content of the nonionic surfactant is 1 to 8 parts by mass based on 100 parts by mass of the carboxy group-containing polymer, but may be 2.0 to 7.5 parts by mass or 3.0 to 7.0 parts by mass. When the content of the nonionic surfactant is less than 1 part by mass, miscibility is deteriorated, and when the content of the nonionic surfactant is more than 8 parts by mass, heat-sensitive gelation is difficult and defoaming properties are also deteriorated.

In a second embodiment, the cloud point of the nonionic surfactant is 30 to 90°C. The cloud point may be 30 to 85°C, 40 to 90°C, 40 to 85°C, 50 to 90°C, and 50 to 85°C. Since the cloud point of the nonionic surfactant correlates with the temperature of heat-sensitive gelation, it is preferable to determine the cloud point of the nonionic surfactant to be used according to the temperature at which the water-curable inorganic composition to which the carboxy group-containing polymer is added is additively manufactured. For example, it is preferable to use a nonionic surfactant which is a cloud point on a high temperature side such as 40 to 90°C and 50 to 90°C in the additive manufacturing outdoors at a high temperature (summer season or the like), and a nonionic surfactant which is a cloud point on a low temperature side such as 30 to 80°C, 30 to 70°C, and 30 to 60°C in the additive manufacturing outdoors at a low temperature (winter season or the like).

In a second embodiment, the HLB value of the nonionic surfactant may be in the range of 11 to 15. The HLB value may be 12 to 14. As the HLB increases, the defoaming properties tends to decrease.

In the second embodiment, the heat-sensitive gelling agent only needs to contain the aqueous medium, the carboxy group-containing polymer, and the surfactant described above, and may contain additives such as an antifoaming agent, a dispersant, an antiaging agent, a viscosity modifier, a preparation for pH, a preservative, an electrolyte, a filler, a plasticizer, starch, and a coloring pigment as long as the effects of the present invention are not affected. The solid content concentration of the heat-sensitive gelling agent can be, for example, 30 to 60 mass%, and may be 40 to 50 mass%.

In order to obtain a heat-sensitive gelling agent, the components to be contained may be mixed, and since a nonionic surfactant having a cloud point of 30 to 90°C is contained, the components are preferably mixed at a temperature equal to or lower than the cloud point of the nonionic surfactant to be contained.

A production example in a case where a carboxy group-containing polymer containing a carboxy group-containing monomer as a monomer unit is provided as a latex will be described below. In this case, a latex is obtained in a state in which the aqueous medium, the carboxy group-containing polymer, and the anionic surfactant required for the heat-sensitive gelling agent are contained.

The latex can be produced by emulsion polymerization of a monomer component containing an ethylene-based unsaturated carboxylic acid monomer, an aliphatic conjugated diene-based monomer, and other copolymerizable monomers together with a surfactant in an aqueous medium.

As the other copolymerizable monomer, at least one kind selected from the group consisting of an alkenyl aromatic monomer, a vinyl cyanide-based monomer, an unsaturated carboxylic acid alkyl ester-based monomer, a hydroxyalkyl group-containing unsaturated monomer, and an unsaturated carboxylic acid amide-based monomer can be used. Specific examples of the monomer are as described above, and the anionic surfactant described above can be used as the surfactant.

Examples of the method of adding the monomer component and other components during the emulsion polymerization include a batch addition method, a divided addition method, a continuous addition method, and a power feed method. Among them, it is preferable to adopt a continuous addition method (Hereinafter, it may be referred to as "continuous addition".). Further, the continuous addition may be performed a plurality of times.

The emulsion polymerization is usually performed using a polymerization initiator, and a chain transfer agent may be used for the purpose of molecular weight adjustment and the like.

Examples of the polymerization initiator include water-soluble polymerization initiators such as lithium persulfate, potassium persulfate, sodium persulfate, and ammonium persulfate; the oil-soluble polymerization initiator such as cumene hydroperoxide, benzoyl peroxide, t-butyl hydroperoxide, acetyl peroxide, diisopropylbenzene hydroperoxide, and 1,1,3,3-tetramethylbutyl hydroperoxide. These can be used singly or in combination of two or more kinds thereof. In particular, it is preferable to select from potassium persulfate, sodium persulfate, cumene hydroperoxide, and t-butyl hydroperoxide. The formulation amount of the polymerization initiator is not particularly limited, but is appropriately adjusted in consideration of the combination of the monomer composition, the pH of the polymerization reaction system, other additives, and the like.

Examples of the chain transfer agent include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; thiuram-based compounds such as tetramethylthiuram disulfide, tetraethylthiuram disulfide, and tetramethylthiuram monosulfide; phenolic compounds such as 2,6-di-t-butyl-4 methylphenol and styrenated phenol; allyl compounds such as allyl alcohol; halogenated hydrocarbon compounds such as dichloromethane, dibromomethane, and carbon tetrabromide; vinyl ethers such as α-benzyloxystyrene, α-benzyloxyacrylonitrile, and α-benzyloxyacrylamide; chain transfer agents such as triphenylethane, pentaphenylethane, acrolein, methacrolein, thioglycolic acid, thiomalic acid, 2-ethylhexylthioglycolate, terpinolene, and α-methylstyrene dimer. These can be used singly or in combination of two or more kinds thereof. The formulation amount of the chain transfer agent can be appropriately adjusted in consideration of a combination of other additives and the like.

By mixing the above-described heat-sensitive gelling agent and the water-curable inorganic composition, a composition for additive manufacturing is obtained, and can be used for additive manufacturing such as 3D printing. By heating the layered object at the time of layering and/or after layering, the heat-sensitive gelling agent gels, and the sagging and crushing of the composition for additive manufacturing are prevented. The heating may be performed, for example, so that the composition for additive manufacturing is, for example, 40 to 100°C, and may be 50 to 90°C. The means for heating is arbitrary, and examples thereof include blowing of hot air, irradiation with far infrared rays, irradiation with a heating lamp, irradiation with microwaves, and blowing of superheated steam.

The mixing ratio of the heat-sensitive gelling agent and the water-curable inorganic composition in the second embodiment may be, for example, 1 to 15 parts by mass or 3 to 10 parts by mass of the heat-sensitive gelling agent in terms of solid content based on 100 parts by mass of the water-curable inorganic composition.

As the water-curable inorganic composition in the second embodiment, Portland cement specified in JIS R 5210:2019, blast furnace cement specified in JIS R 5211:2019, silica cement specified in JIS R 5212:2019, fly ash cement specified in JIS R 5213:2019, or ecological cement specified in JIS R 5214:2019, or mortar or concrete comprising these cements can be used.

### [Examples]

Hereinafter, the present invention will be described with reference to examples, but the present invention is not limited to the following examples.

### (Copolymer 1)

Under a nitrogen atmosphere, a pressure-resistant polymerization reactor was charged with 95 parts by mass of polymerization water, 7.2 parts by mass of styrene, 2.3 parts by mass of 1,3-butadiene, 1.2 parts by mass of acrylic acid, 0.5 parts by mass of fumaric acid, 2 parts by mass of hydroxyethyl acrylate, 6 parts by mass of cyclohexene, 0.03 parts by mass of t-dodecyl mercaptan, 0.9 parts by mass of sodium dodecylbenzenesulfonate, and 0.3 parts by mass of sodium hydrogen carbonate, and stirring was started. One part by mass of potassium persulfate was added, the temperature in the reactor was raised to 70°C, and 19.5 parts by mass of styrene, 5.3 parts by mass of 1,3-butadiene, and 0.06 parts by mass of t-dodecyl mercaptan were continuously added over 150 minutes. Immediately after completion of the addition of the monomers and other compounds, 28.0 parts by mass of styrene, 34 parts by mass of 1,3-butadiene, and 0.36 parts by mass of t-dodecyl mercaptan were continuously added over 360 minutes. Thereafter, the temperature in the polymerization reactor was raised to 85°C, and the polymerization was terminated when the polymerization conversion rate exceeded 98%. Subsequently, the pH was adjusted to 7.0 with an aqueous solution of sodium hydroxide, and steam distillation was performed in order to remove unreacted monomers and other low boiling point compounds, thereby obtaining an emulsion containing copolymer 1.

### (Copolymer 2)

Under a nitrogen atmosphere, a pressure-resistant polymerization reactor was charged with 90 parts by mass of polymerization water, 0.16 parts by mass of sodium hydrogen carbonate, 0.6 parts by mass of sodium dodecylbenzenesulfonate, 5.2 parts by mass of styrene, 2.7 parts by mass of 1,3-butadiene, 0.1 parts by mass of methyl methacrylate, 4 parts by mass of cyclohexene, 1.2 parts by mass of acrylic acid, 1 part by mass of hydroxyethyl acrylate, and 0.5 parts by mass of fumaric acid, and stirring was started. One part by mass of potassium persulfate was added, the temperature in the reactor was raised to 68°C, and 66.3 parts by mass of styrene, 23 parts by mass of 1,3-butadiene, 1 part by mass of t-dodecylmercaptan, and 0.5 parts by mass of sodium dodecylbenzenesulfonate were continuously added over 450 minutes. Thereafter, the polymerization was terminated when the polymerization conversion rate exceeded 98%. Subsequently, the pH was adjusted to 7.0 with an aqueous solution of sodium hydroxide, and steam distillation was performed in order to remove unreacted monomers and other low boiling point compounds to obtain an emulsion containing copolymer 2.

### (Copolymer 3)

CYATEX NA-106 (acrylonitrile-butadiene-based latex) manufactured by NIPPON A&L INC. was used as Copolymer 3.

### (Copolymer 4)

To J-9049 (carboxylic acid-unmodified styrene-butadiene-based latex) manufactured by NIPPON A&L INC., 2.0 parts by mass of sodium dodecylbenzenesulfonate was added to obtain Copolymer 4.

### (Copolymer 5)

Under a nitrogen atmosphere, a pressure-resistant polymerization reactor was charged with 0.8 parts by mass of itaconic acid, 0.04 parts by mass of sodium alkyl diphenyl ether disulfonate, 0.24 parts by mass of soluble castor oil, 1.4 parts by mass of β-naphthalene sulfonic acid formalin condensate sodium salt, and 100 parts by mass of polymerization water under a nitrogen atmosphere, and stirring was started, and the temperature in the reactor was raised to 67°C. When the temperature reached 67°C, 0.33 parts by mass of potassium persulfate was added, and immediately after the completion of the addition of potassium persulfate, 9.6 parts by mass of 1,3-butadiene, 14.2 parts by mass of methyl methacrylate, 0.06 parts by mass of t-dodecyl mercaptan, 0.012 parts by mass of soluble castor oil, and 0.06 parts by mass of β-naphthalenesulfonic acid formalin condensate sodium salt were continuously added over 100 minutes. After completion of the addition, the reaction was continued for 80 minutes, and then 20.4 parts by mass of 1,3-butadiene, 31.0 parts by mass of methyl methacrylate, 0.14 parts by mass of t-dodecyl mercaptan, 0.027 parts by mass of soluble castor oil, and 0.14 parts by mass of β-naphthalenesulfonic acid formalin condensate sodium salt were continuously added over 270 minutes. After completion of the addition, stirring was continued for 90 minutes, and then 0.2 parts by mass of itaconic acid, 0.01 parts by mass of soluble castor oil, and 0.05 parts by mass of β-naphthalenesulfonic acid formalin condensate sodium salt were added. Furthermore, 6 parts by mass of 1,3-butadiene, 17.8 parts by mass of methyl methacrylate, 0.1 parts by mass of t-dodecyl mercaptan, 0.05 parts by mass of soluble castor oil, and 0.35 parts by mass of β-naphthalenesulfonic acid formalin condensate sodium salt were continuously added over 120 minutes. Thereafter, the polymerization was terminated when the polymerization conversion rate reached 98% or more. Then, the pH was adjusted to 7.0 with potassium hydroxide, and steam distillation was performed to remove unreacted monomers and other low boiling point compounds to obtain an emulsion containing copolymer 5.

### (Copolymer 6)

CYATEX SR-110 (carboxylic acid-modified styrene-butadiene-based latex) manufactured by NIPPON A&L INC. was used as copolymer 6.

### (Copolymer 7)

Under a nitrogen atmosphere, a pressure-resistant polymerization reactor was charged with 90 parts by mass of polymerization water, 6.0 parts by mass of styrene, 4.0 parts by mass of 1,3-butadiene, 1.0 parts by mass of methyl methacrylate, 1.0 parts by mass of hydroxyethyl acrylate, 2.0 parts by mass of fumaric acid, 2 parts by mass of cyclohexene, 0.15 parts by mass of sodium dodecylbenzenesulfonate, and 0.3 parts by mass of sodium hydrogen carbonate, and stirring was started. One part by mass of potassium persulfate was added, the temperature in the reactor was raised to 70°C, and 54.0 parts by mass of styrene, 29.0 parts by mass of 1,3-butadiene, 3.0 parts by mass of methyl methacrylate, 0.47 parts by mass of t-dodecyl mercaptan, and 0.1 parts by mass of sodium dodecylbenzenesulfonate were continuously added over 420 minutes. Immediately after completion of the addition of the monomers and other compounds, 0.1 parts by mass of t-dodecyl mercaptan was added, and the mixture was reacted for 150 minutes while being maintained at 70°C. Thereafter, the temperature in the polymerization reactor was raised to 85°C, and the polymerization was terminated when the polymerization conversion rate exceeded 98%. Subsequently, the pH was adjusted to 7.0 with an aqueous solution of sodium hydroxide, and steam distillation was performed in order to remove unreacted monomers and other low boiling point compounds, thereby obtaining an emulsion containing copolymer 7.

### (Acrylic Copolymer 1)

Under a nitrogen atmosphere, a pressure-resistant polymerization reactor was charged with 105 parts by mass of polymerization water, 5.2 parts by mass of styrene, 4.6 parts by mass of 2-ethylhexyl acrylate, 1.5 parts by mass of itaconic acid, 0.2 parts by mass of ethylene glycol dimethacrylate, 0.3 parts by mass of sodium dodecylbenzenesulfonate, and 0.3 parts by mass of sodium hydrogen carbonate, and stirring was started. One part by mass of potassium persulfate was added, the temperature in the reactor was raised to 70°C, and 45.8 parts by mass of styrene, 40.6 parts by mass of 2-ethylhexyl acrylate, 2.1 parts by mass of ethylene glycol dimethacrylate, 0.7 parts by mass of sodium dodecylbenzenesulfonate, and 10 parts by mass of polymerization water were continuously added over 300 minutes. Thereafter, the polymerization was terminated when the polymerization conversion rate exceeded 98%. Subsequently, the pH of the obtained emulsion was adjusted to 7.0 with an aqueous solution of sodium hydroxide, and steam distillation was performed to remove unreacted monomers and other low boiling point compounds to obtain an acrylic copolymer 1.

### (Examples 1 to 14 and Comparative Examples 1 to 3)

A mixture obtained by adding the nonionic surfactant described in Table 1 to 100 parts by mass of Copolymers 1 to 7 in the added amount described in the same table was used as a heat-sensitive gelling agent. In Example 14, SUMIKAFLEX 510HQ manufactured by Sumika Chemtex Company, Limited was used.

### (Comparative Examples 4 to 8)

Copolymers 2 to 5 and acrylic copolymer 1 to which a nonionic surfactant was not added were used as heat-sensitive gelling agents.

### (Comparative Example 9)

A commercially available latex for mortar mixing (L-3642E manufactured by NIPPON A&L INC.) was used as a gelling agent.

### (Comparative Examples 10 to 11)

A commercially available mortar ("quick-dry cement (sokkan cement)" manufactured by Katei kagaku kogyo Co., Ltd.) was used, and a heat-sensitive gelling agent was not used. In Comparative Example 11, 1 part by mass of sodium gluconate as a setting retarder was added to 100 parts by mass of mortar.

**[Table 1]**

| | | | | Nonionic surfactant | | | | | Penetration resistance value (N)/heating time (second) 600 w | | | | Penetration resistance value after heating (a1)/penetration resistance value before heating (a2) | | | Layering properties | |
|---|---|---|---|---|---|---|---|---|---|---|---|---|---|---|---|---|---|
| | No. | Base polymer | Polymer Tg (°C) | Nonionic surfactant (EMULGEN manufactured by Kao Corporation) | Composition | Added amount (part by mass) | Cloud point (°C) | HLB | 0 seconds | 30 seconds | 50 seconds | 70 seconds | 30 seconds | 50 seconds | 70 seconds | Heating | Non-heating |
| | 1 | Copolymer 1 | -28 | 108 | Polyoxyethylene lauryl ether | 7 | 40 | 12.1 | 0.098 | 7.340 | 6.938 | 17.798 | 74.9 | 70.8 | 181.6 | Excellent 10 or more layers | Poor 3 or less layers |
| | 2 | Copolymer 1 | -28 | MS-110 | Polyoxyalkylene alkyl ether | 7 | 55 | 12.7 | 0.162 | 14.872 | 15.076 | 19.151 | 91.8 | 93.1 | 118.2 | Excellent 10 or more layers | Poor 3 or less layers |
| | 3 | Copolymer 1 | -28 | A-60 | Polyoxyethylene distyrenated phenyl ether | 7 | 61 | 12.8 | 0.116 | 21.437 | 35.230 | 50.790 | 184.8 | 303.7 | 437.8 | Excellent 10 or more layers | Poor 3 or less layers |
| | 4 | Copolymer 1 | -28 | 109P | Polyoxyethylene lauryl ether | 7 | 83 | 13.6 | 0.142 | 4.410 | 6.450 | 43.290 | 31.1 | 45.4 | 304.9 | Excellent 10 or more layers | Poor 3 or less layers |
| | 5 | Copolymer 1 | -28 | A-90 | Polyoxyethylene distyrenated phenyl ether | 7 | 90 | 14.5 | 0.093 | 8.065 | 22.967 | 49.250 | 86.7 | 247.0 | 529.6 | Excellent 10 or more layers | Poor 3 or less layers |
| | 6 | Copolymer 1 | -28 | 120 | Polyoxyethylene lauryl ether | 7 | 98 | 15.3 | 0.170 | 4.546 | 6.754 | 17.686 | 26.7 | 39.7 | 104.0 | Excellent 10 or more layers | Poor 3 or less layers |
| | 7 | Copolymer 1 | -28 | 147 | Polyoxyethylene lauryl ether | 7 | >100 | 16.3 | 0.135 | 2.609 | 6.841 | 17.167 | 19.3 | 50.7 | 127.2 | Good 7 to 9 layers | Poor 3 or less layers |
| | 7 | Copolymer 1 | -28 | 147 | Polyoxyethylene lauryl ether | 7 | >100 | 16.3 | 0.135 | 2.609 | 6.841 | 17.167 | 19.3 | 50.7 | 127.2 | Good 7 to 9 layers | Poor 3 or less layers |
| | 8 | Copolymer 1 | -28 | MS-110 | Polyoxyalkylene alkyl ether | 10 | 55 | 12.7 | 0.256 | 11.232 | 10.002 | 15.916 | 43.9 | 39.1 | 62.2 | Excellent 10 or more layers | Poor 3 or less layers |
| | 9 | Copolymer 2 | 27 | A-60 | Polyoxyethylene distyrenated phenyl ether | 7 | 61 | 12.8 | 0.136 | 44.792 | 71.500 | 119.526 | 329.4 | 525.7 | 878.9 | Excellent 10 or more layers | Poor 3 or less layers |
| | 10 | Copolymer 3 | -35 | A-60 | Polyoxyethylene distyrenated phenyl ether | 7 | 61 | 12.8 | 0.126 | 4.018 | 8.878 | 18.870 | 31.9 | 70.5 | 149.8 | Excellent 10 or more layers | Poor 3 or less layers |
| | 11 | Copolymer 4 | -40 | A-60 | Polyoxyethylene distyrenated phenyl ether | 7 | 61 | 12.8 | 0.160 | 4.724 | 7.300 | 12.672 | 29.5 | 45.6 | 79.2 | Excellent 10 or more layers | Poor 3 or less layers |
| | 12 | Copolymer 5 | -20 | A-60 | Polyoxyethylene distyrenated phenyl ether | 7 | 61 | 12.8 | 0.126 | 6.556 | 14.752 | 20.674 | 52.0 | 117.1 | 164.1 | Excellent 10 or more layers | Poor 3 or less layers |
| | 13 | Acrylic Copolymer 1 | 6 | A-60 | Polyoxyethylene distyrenated phenyl ether | 7 | 61°C | 12.8 | 0.102 | 7.918 | 11.818 | 15.416 | 77.6 | 115.9 | 151.1 | Excellent 10 or more layers | Poor 3 or less layers |
| | 14 | Ethylene vinyl acetate Copolymer | 0 | A-60 | Polyoxyethylene distyrenated phenyl ether | 7 | 61°C | 12.8 | 0.142 | 4.064 | 6.686 | 7.946 | 28.6 | 47.1 | 56.0 | Excellent 10 or more layers | Poor 3 or less layers |

**[Table 2]**

| | | | | Nonionic surfactant | | | | | Penetration resistance value (N)/heating time (second) 600 w | | | | Penetration resistance value after heating (a1)/penetration resistance value before heating (a2) | | | Layering properties | |
|---|---|---|---|---|---|---|---|---|---|---|---|---|---|---|---|---|---|
| | No. | Base polymer | Polymer Tg (°C) | Nonionic surfactant (EMULGEN manufactured by Kao Corporation) | Composition | Added amount (part by mass) | Cloud point (°C) | HLB | 0 seconds | 30 seconds | 50 seconds | 70 seconds | 30 seconds | 50 seconds | 70 seconds | Heating | Non-heating |
| | 1 | Copolymer 1 | -28 | 147 | Polyoxyethylene lauryl ether | 10 | >100 | 16.3 | 0.192 | 1.304 | 2.194 | 11.044 | 6.8 | 11.4 | 57.5 | Average 4 to 6 layers | Poor 3 or less layers |
| | 2 | Copolymer 6 | -27 | A-60 | Polyoxyethylene distyrenated phenyl ether | 7 | 61 | 12.8 | 0.49 | 2.50 | 4.54 | 13.31 | 5.1 | 9.2 | 27.1 | Average 4 to 6 layers | Poor 3 or less layers |
| | 3 | Copolymer 7 | 7 | A-60 | Polyoxyethylene distyrenated phenyl ether | 7 | 61 | 12.8 | 0.52 | 4.37 | 10.04 | 36.14 | 8.4 | 19.3 | 69.5 | Average 4 to 6 layers | Poor 3 or less layers |
| Comparative Example | 4 | Copolymer 2 | 27 | - | - | - | - | - | Immediate aggregation after adding copolymer | | | | - | - | - | - | - |
| | 5 | Copolymer 3 | -35 | - | - | - | - | - | Immediate aggregation after adding copolymer | | | | - | - | - | - | - |
| | 6 | Copolymer 4 | -40 | - | - | - | - | - | Immediate aggregation after adding copolymer | | | | - | - | - | - | - |
| | 7 | Copolymer 5 | -20 | - | - | - | - | - | Immediate aggregation after adding copolymer | | | | - | - | - | - | - |
| | 8 | Acrylic Copolymer 1 | 6 | - | - | - | - | - | Immediate aggregation after adding copolymer | | | | - | - | - | - | - |
| | 9 | Commercially available latex for mortar mixing | -1 | - | - | - | - | - | 0.282 | 0.984 | 1.054 | 5.030 | 3.5 | 3.7 | 17.8 | Average 4 to 6 layers | Poor 3 or less layers |
| | 10 | Commercially available mortar (no gelling agent) | - | - | - | - | - | - | 0.300 | 3.012 | 2.930 | 5.122 | 10.0 | 9.8 | 17.1 | Average 4 to 6 layers | Poor 3 or less layers |
| | 11 | Commercially available mortar (no gelling agent/ setting retarder added) | - | - | - | - | - | - | 0.128 | 0.190 | 1.343 | 3.631 | 1.5 | 10.5 | 28.4 | Poor 3 or less layers | Poor 3 or less layers |

### [Penetration resistance value]

In a cylindrical container having an open top, 100 g of the formulations of the following (1) to (5) [The amounts of (1) to (5) are in terms of solid content, and the moisture content is set to 18.5 mass%.] were introduced.
(1) 100 parts by mass of mortar ("quick-dry cement (sokkan cement)" manufactured by Katei kagaku kogyo Co., Ltd.)
(2) 1 part by mass of sodium gluconate
(3) 0.5 parts by mass of carboxymethyl cellulose
(4) 0.1 parts by mass of silicone antifoaming agent ("DOWSIL^{™} SH 5507 Emulsion" manufactured by Dow Toray Co., Ltd.)
(5) 4.5 parts by mass of gelling agents of Example 1 to Comparative Example 2

Next, the bottom surface of the cylindrical container was beaten and defoamed with a spatula for 1 minute. After defoaming, the penetration resistance value (needle diameter = 2 mm, piercing speed = 30 mm/min, piercing depth = 10 mm) was measured at 17°C. At the time of measurement, the maximum value was read, and measurement was performed at five points for one sample to obtain an average value. The average value obtained at this time was defined as a0.

The defoamed product was heated with a microwave at 600 W for 30 seconds, the whole container was cooled with ice water at 2 to 5°C to set the temperature of the content to 17°C, and the average value of the penetration resistance value was obtained in the same manner as described above at the same temperature. The average value obtained at this time was defined as a1. Table 1 shows a0, a1, and a1/a0.

### [Layering properties]

For Examples 1 to 13 and Comparative Examples 1 to 2 to which a gelling agent was added and Comparative Example 3 to 4 to which a gelling agent was not added, the mixture was extruded into a string shape having a width of about 10 mm under the condition of a diameter of a squeezer of 10 mm using a squeezing bag for food processing and a squeezer, and when extruded by about 100 mm, heated by a microwave heating device of 600 W for 20 seconds in the case of heating, and then folded back and layered, and how many layers were formed without sagging or breaking was tested. When 10 or more layers could be formed, it was marked as Excellent; when 7 to 9 layers could be formed, it was marked as Good; when 4 to 6 layers could be formed, it was marked as Average; and when 3 or less layers could be formed, it was marked as Poor.

The composition for additive manufacturing of Examples had good final curing strength and adhesive strength between layers. In addition, when a light vibration (such as hitting with a spatula) was applied to the container containing the composition for additive manufacturing, bubbles disappeared. In addition, the discharge properties of the nozzle of the composition for additive manufacturing before curing was also good.

### (Copolymer A)

A pressure-resistant polymerization reactor equipped with a stirrer was charged with 150 parts by mass of polymerization water and the initially added components shown in Table 3 at once, the temperature was raised to 75°C, and the continuously added components shown in Table 3 were continuously added for 8 hours to cause a polymerization reaction. The polymerization was terminated when the polymerization conversion rate exceeded 98%. Then, the pH was adjusted to 7 using sodium hydroxide, and steam distillation was performed to remove unreacted monomers and other low boiling point compounds to obtain a latex containing copolymer A. The copolymer A corresponds to a carboxy group-containing polymer in which the ratio of the carboxy group-containing monomer to the total monomers is 0.1 to 5.0 mass%. Table 3 shows the particle size of the latex particles.

### (Copolymers B to I)

Copolymers B to I were obtained in the same manner as in Copolymer A except that the components were changed to those shown in Table 3. The copolymers B to F and H correspond to a carboxy group-containing polymer in which the ratio of the carboxy group-containing monomer to the monomer is 0.1 to 5.0 mass%. The copolymer G is a carboxy group-containing polymer, but the ratio of the carboxy group-containing monomer to the total monomers is more than 5.0 mass%. Copolymer I is a polymer having no carboxy group. Table 3 shows the average particle size of the latex particles.

**[Table 3]**

| | Copolymer A | | Copolymer B | | Copolymer C | | Copolymer D | | Copolymer E | | Copolymer F | | Copolymer G | | Copolymer H | | Copolymer I | |
|---|---|---|---|---|---|---|---|---|---|---|---|---|---|---|---|---|---|---|
| | Initial | Continuous | Initial | Continuous | Initial | Continuous | Initial | Continuous | Initial | Continuous | Initial | Continuous | Initial | Continuous | Initial | Continuous | Initial | Continuous |
| Butadiene | 4.4 | 39.6 | 4.1 | 36.9 | 6.1 | 54.9 | 5.1 | 45.9 | 6.7 | 60.3 | 5.0 | 45 | 5.4 | 48.6 | 6.7 | 60.3 | 4.5 | 40.5 |
| Styrene | 5.5 | 49.5 | 5.5 | 49.5 | 3.5 | 31.5 | 4.5 | 40.5 | 3.0 | 27 | | | | | | | 5.5 | 49.5 |
| Methyl methacrylate | | | | | | | | | | | 4.8 | 43.2 | | | | | | |
| Acrylonitrile | | | | | | | | | | | | | 4 | 36 | 3 | 27 | | |
| Hydroxyethyl acrylate | | | 2 | | | | | | | | | | | | | | | |
| Hydroxyethyl methacrylate | | | | | 2 | | | | - | | | | | | 1 | | | |
| Itaconic acid | 1 | | | | | | | | | | 1 | | | | 1 | | | |
| Fumaric acid | | | 0.5 | | | | | | | | | | | | | | | |
| Acrylic acid | | | 1.5 | | 1 | | | | 3 | | | | | | | | | |
| Methacrylic acid | | | | | | | 3 | | | | 1 | | 6 | | 1 | | | |
| Methacrylamide | | | | | 1 | | | | | | | | | | | | | |
| t-Dodecyl mercaptan | 0.06 | 0.24 | 0.2 | 0.5 | 0.15 | 0.45 | 0.06 | 0.24 | 0.06 | 0.24 | 0.02 | 0.08 | 0.1 | 0.4 | 0.12 | 0.85 | 0.02 | 0.12 |
| Sodium dodecylbenzenesulfonate | | | 0.4 | 0.6 | 0.2 | | 1 | 4 | 1 | 2 | | | | | | | 0.2 | 1.8 |
| Sodium alkyl diphenyl ether disulfonate | 0.3 | 0.7 | | | 0.3 | 1.2 | | | | | 0.6 | | 0.2 | 1.3 | 0.4 | 1.6 | | |
| Sodium rosinate | | | | | | | | | | | | | | | | | | 5 |
| Potassium persulfate | 1 | | 1 | | 1 | | 1 | | 1 | | 1 | | 1 | | 1 | | 1 | |
| Average particle size (nm) | 180 | | 150 | | 130 | | 120 | | 120 | | 180 | | 180 | | 150 | | 230 | |

### (Example 21 to 30)

Latexes containing the copolymers A, B, C, E, F, and H shown in Table 4 and a nonionic surfactant shown in the same table were mixed at a ratio shown in the same table to prepare a heat-sensitive gelling agent. The characteristics were measured according to the following method, and the results are shown in Table 4.

### (Comparative Examples 21 to 26)

Latexes containing the copolymers A, D, G, and I shown in Table 5 and a nonionic surfactant shown in the same table were mixed at a ratio shown in the same table to prepare a heat-sensitive gelling agent. The characteristics were measured according to the following method, and the results are shown in Table 5.

### (Mortar miscibility and heat-sensitive gelation)

In a 200 mL polycup (polymer cup), 100 g of quick-dry cement (sokkan cement) manufactured by Katei kagaku kogyo Co., Ltd., and 1.0 g of sodium gluconate were weighed and the mixture was thoroughly stirred. Next, 24.4 g of the heat-sensitive gelling agent adjusted to a solid content of 45% and 6.3 g of water were added and stirred well. The polycup (polymer cup) was immersed in boiling water and heated for 10 minutes. Incidentally, sodium gluconate is a setting retarder, and if not added, the mixture sets quickly after heating. The evaluation criteria were as follows.

### [Evaluation criteria]

Mortar miscibility: Good = Good, Thickening = Average, Solidification = Poor
Heat-sensitive gelation: Coagulation = Good, Fluidity = Poor

### (Defoaming properties)

In a 1000 mL measuring cylinder, 200 g of the heat-sensitive gelling agent adjusted to a solid content of 45% was weighed. Blowing 800 mL of air into the latex for 35 seconds. The volume of the foam was read. The smaller the foaming volume after 10 minutes from air blowing is, the better the defoaming properties is.

**[Table 4]**

| | | Example 21 | Example 22 | Example 23 | Example 24 | Example 25 | Example 26 | Example 27 | Example 28 | Example 29 | Example 30 |
|---|---|---|---|---|---|---|---|---|---|---|---|
| | | Copolymer A | Copolymer A | Copolymer A | Copolymer A | Copolymer A | Copolymer B | Copolymer C | Copolymer E | Copolymer F | Copolymer H |
| Butadiene | | 44 | 44 | 44 | 44 | 44 | 41 | 61 | 67 | 50 | 67 |
| Styrene | | 55 | 55 | 55 | 55 | 55 | 55 | 35 | 30 | - | - |
| Methyl methacrylate | | - | - | - | - | - | - | - | - | 48 | - |
| Acrylonitrile | | - | - | - | - | - | - | - | - | - | 30 |
| Hydroxyethyl acrylate | | - | - | - | - | - | 2 | - | - | - | - |
| Hydroxyethyl methacrylate | | - | - | - | - | - | - | 2 | - | - | 1 |
| Itaconic acid | | 1 | 1 | 1 | 1 | 1 | - | - | - | 1 | 1 |
| Fumaric acid | | - | - | - | - | - | 0.5 | - | - | - | - |
| Acrylic acid | | - | - | - | - | - | 1.5 | 1 | 3 | - | - |
| Methacrylic acid | | - | - | - | - | - | - | - | - | 1 | 1 |
| Methacrylamide | | - | - | - | - | - | - | 1 | - | - | - |
| Sodium dodecylbenzenesulfonate | | - | - | - | - | - | 1 | 0.2 | 3 | - | - |
| Sodium alkyl diphenyl ether disulfonate | | 1 | 1 | 1 | 1 | 1 | - | 1.5 | - | 0.6 | 2 |
| Sodium rosinate | | - | - | - | - | - | - | - | - | - | - |
| Average particle size (nm) | | 180 | 180 | 180 | 180 | 180 | 150 | 130 | 120 | 180 | 150 |
| | | | | | | | | | | | |
| Polyoxyethylene polyoxypropylene alkyl ether | Cloud point 55°C (HLB 12.7) | 3 | 5 | 7 | - | - | 7 | 7 | 7 | 7 | 7 |
| Polyoxyethylene distyrenated phenyl ether | Cloud point 61°C (HLB 12.8) | - | - | - | 7 | - | - | - | - | - | - |
| Polyoxyethylene lauryl ether | Cloud point 83°C (HLB 13.6) | - | - | - | - | 7 | - | - | - | - | - |
| Polyoxyethylene lauryl ether | Cloud point 98°C (HLB 15.3) | - | - | - | - | - | - | - | - | - | - |
| Polyoxyethylene lauryl ether | Cloud point >100°C (HLB 16.3) | - | - | - | - | - | - | - | - | - | - |
| Mortar miscibility | | Good | Good | Good | Good | Good | Good | Average | Good | Good | Good |
| Heat-sensitive gelation | | Good | Good | Good | Good | Good | Good | Good | Good | Good | Good |
| Foaming volume (ml) (Defoaming properties) | Immediately after air blowing | 1000 | 1000 | 1000 | 1000 | 1000 | 800 | 1000 | 1000 | 900 | 950 |
| | After 10 minutes | 250 | 250 | 300 | 300 | 500 | Defoaming | 350 | 450 | 250 | Defoaming |

**[Table 5]**

| | | Comparative Example 21 | Comparative Example 22 | Comparative Example 23 | Comparative Example 24 | Comparative Example 25 | Comparative Example 26 |
|---|---|---|---|---|---|---|---|
| | | Copolymer A | Copolymer A | Copolymer A | Copolymer D | Copolymer G | Copolymer I |
| Butadiene | | 44 | 44 | 44 | 51 | 54 | 45 |
| Styrene | | 55 | 55 | 55 | 45 | - | 55 |
| Methyl methacrylate | | - | - | - | - | - | - |
| Acrylonitrile | | - | - | - | - | 40 | - |
| Hydroxyethyl acrylate | | - | - | - | - | - | - |
| Hydroxyethyl methacrylate | | - | - | - | - | - | - |
| Itaconic acid | | 1 | 1 | 1 | - | - | - |
| Fumaric acid | | - | - | - | - | - | - |
| Acrylic acid | | - | - | - | - | - | - |
| Methacrylic acid | | - | - | - | 3 | 6 | - |
| Methacrylamide | | - | - | - | - | - | - |
| Sodium dodecylbenzenesulfonate | | - | - | - | 5 | - | 2 |
| Sodium alkyl diphenyl ether disulfonate | | 1 | 1 | 1 | - | 1.5 | - |
| Sodium rosinate | | - | - | - | - | - | 5 |
| Average particle size (nm) | | 180 | 180 | 180 | 120 | 180 | 230 |
| | | | | | | | |
| Polyoxyethylene polyoxypropylene alkyl ether | Cloud point 55°C (HLB 12.7) | - | - | - | 7 | 7 | 7 |
| Polyoxyethylene distyrenated phenyl ether | Cloud point 61°C (HLB 12.8) | - | - | - | - | - | - |
| Polyoxyethylene lauryl ether | Cloud point 83°C (HLB 13.6) | - | - | - | - | - | - |
| Polyoxyethylene lauryl ether | Cloud point 98°C (HLB 15.3) | - | 7 | - | - | - | - |
| Polyoxyethylene lauryl ether | Cloud point >100°C (HLB 16.3) | - | - | 7 | - | - | - |
| Mortar miscibility | | Poor | Good | Good | Good | Poor | Good |
| Heat-sensitive gelation | | - | Poor | Poor | Poor | - | Good |
| Foaming volume (ml) (Defoaming properties) | Immediately after air blowing | - | 1000 | 1000 | 1000 | 950 | 1000 |
| | After 10 minutes | - | 600 | 700 | 550 | 400 | 600 |

## Claims

1. A method for producing an additive manufactured object, the method comprising layering a composition for additive manufacturing comprising a water-curable inorganic composition and a heat-sensitive gelling agent, and non-fluidizing the composition for additive manufacturing by heating at the time of layering and/or after layering,
wherein the heat-sensitive gelling agent contains an aqueous medium, a polymer dispersed in the aqueous medium, and a nonionic surfactant having a cloud point of 30°C or higher and an HLB value of 10 to 18,
wherein the heat-sensitive gelling agent is a heat-sensitive gelling agent having a value of a1/a0 of 15 or more when, in a penetration resistance value (needle diameter = 2 mm, piercing speed = 30 mm/min, piercing depth = 10 mm) measured after defoaming by adding 100 g of the following formulation of (1) to (5) [The amounts of (1) to (5) are in terms of solid content, and the moisture content is set to 18.5 mass%.]:
(1) 100 parts by mass of mortar;
(2) 1 part by mass of sodium gluconate;
(3) 0.5 parts by mass of carboxymethyl cellulose:
(4) 0.1 parts by mass of silicone antifoaming agent; and
(5) 4.5 parts by mass of the heat-sensitive gelling agent,
into a cylindrical container with an open top,
a value at 17 ± 3°C immediately after defoaming is defined as a0 and a value at 17 ± 3°C after microwave heating at 600 W for 30 seconds after defoaming is defined as a1.

2. The method according to claim 1, wherein the polymer is at least one kind selected from the group consisting of a homopolymer or copolymer of a conjugated diene and a homopolymer or copolymer of an ethylene-based unsaturated monomer.

3. The method according to claim 2, wherein the homopolymer or copolymer of the conjugated diene is at least one kind selected from the group consisting of styrene-butadiene-based rubber, methylmethacrylate-butadiene-based rubber, acrylonitrile-butadiene-based rubber, styrene-butadiene-vinylpyridine-based rubber, butadiene rubber, and natural rubber.

4. The method according to claim 1, wherein the nonionic surfactant is a polyoxyalkylene alkyl ether and/or a polyoxyethylene aryl ether.

5. The method according to claim 4, wherein in the polyoxyethylene alkyl ether, an alkyl moiety is an alkyl having 12 to 20 carbon atoms.

6. The method according to claim 4, wherein the polyoxyethylene aryl ether has an aryl moiety in which at least one of hydrogen atoms is aralkyl-substituted.

7. The method according to claim 1, wherein the water-curable inorganic composition is cement specified in JIS R 5210:2019, JIS R 5211:2019, JIS R 5212:2019, JIS R 5213:2019, or JIS R 5214:2019, or mortar or concrete comprising the cement.

8. A heat-sensitive gelling agent for a water-curable inorganic composition to be additive manufactured, the heat-sensitive gelling agent comprising:
a dispersion comprising an aqueous medium, a carboxy group-containing polymer (with the proviso that the polymer has no group represented by -NHCH₂O-.) comprising a carboxy group-containing monomer as a monomer unit, dispersed in the aqueous medium, and a surfactant (in the dispersion, the carboxy group may form a salt.),
wherein a ratio of the carboxy group-containing monomer to all monomers constituting the carboxy group-containing polymer is 0.1 to 5.0 mass%, and
the surfactant comprising:
0.5 to 3 parts by mass of an anionic surfactant based on 100 parts by mass of the carboxy group-containing polymer; and
1 to 8 parts by mass of a nonionic surfactant having a cloud point of 30 to 90°C based on 100 parts by mass of the carboxy group-containing polymer.

9. The heat-sensitive gelling agent according to claim 8, wherein the carboxy group-containing polymer contains an ethylene-based unsaturated carboxylic acid monomer as the carboxy group-containing monomer and an aliphatic conjugated diene-based monomer as monomer units.

10. The heat-sensitive gelling agent according to claim 9, further comprising, as a monomer unit, at least one kind selected from the group consisting of an alkenyl aromatic monomer, a vinyl cyanide-based monomer, an unsaturated carboxylic acid alkyl ester-based monomer, a hydroxyalkyl group-containing unsaturated monomer, and an unsaturated carboxylic acid amide-based monomer.

11. The heat-sensitive gelling agent according to claim 8, wherein the anionic surfactant is a sulfonic acid-based anionic surfactant.

12. The heat-sensitive gelling agent according to claim 8, wherein the nonionic surfactant is a polyoxyalkylene alkyl ether and/or a polyoxyalkylene aryl ether.

13. The heat-sensitive gelling agent of claim 8, wherein the nonionic surfactant has an HLB value of 11 to 15.

14. A composition for additive manufacturing, comprising: the heat-sensitive gelling agent according to any one of claims 8 to 13; and a water-curable inorganic composition.

15. The composition for additive manufacturing according to claim 14, wherein the water-curable inorganic composition is cement specified in JIS R 5210:2019, JIS R 5211:2019, JIS R 5212:2019, JIS R 5213:2019, or JIS R 5214:2019, or mortar or concrete comprising the cement.
